# EUROPEAN PATENT APPLICATION

(11) **EP 4 794 455 A1**
(43) Date of publication of application: **19.08.2026**
(21) Application number: 25158481.9
(22) Date of filing: 18.02.2025
(51) Int. Cl.: H05B 47/19, H04L 9/40, H04W 4/80, H05B 47/175

(54) **NFC-BASED ADJUSTMENT FOR FIXED OUTPUT DRIVERS**

(71) Applicant: Tridonic GmbH & Co. KG, 6851 Dornbirn (AT)
(72) Inventor: Schmölzer, Andreas, 6851 Dornbirn (AT); Carracedo Cordovilla, Luis Javier, 6851 Dornbirn (AT); Kleber, Norbert, 6851 Dornbirn (AT)
(74) Representative: Rupp, Christian

(57) **Abstract**

The present invention provides a fixed output driver. The fixed output driver comprises: a power supply circuit configured to output a constant output characteristic based on a predefined value; an NFC communication module configured to receive one or more control parameters from an external NFC-enabled device; and a control circuit configured to adjust the output characteristic of the driver within a predefined range relative to the predefined value based on the received control parameters, without modifying the predefined value.

## Description

### TECHNICAL FIELD

The present invention relates to fixed output driver technology, applicable to various lighting and electronic systems, including but not limited to LED drivers. More particularly, it concerns a method and system for adjusting output characteristics of fixed output drivers in real-time while in operation, enhancing flexibility, efficiency, and usability across different applications that require controlled output regulation.

### BACKGROUND

Fixed output drivers are primarily designed to provide a constant and stable output, typically without user-adjustable dimming or configuration options. In many applications, such as industrial lighting, signage, emergency lighting, and other electronic systems requiring regulated power output, FO drivers serve as reliable and cost-effective solutions.

In specialized lighting applications, such as museums, galleries, retail displays, and architectural installations, there is often a need to fine-tune light intensity, color temperature, or other output parameters to achieve optimal visual effects. Traditionally, some fixed output LED drivers have integrated mechanical potentiometers on the driver board, enabling installers to manually adjust brightness or output characteristics after installation. This method allows for one-time or occasional fine-tuning without requiring complex dimming circuits.

However, this approach has several limitations. Firstly, mechanical potentiometers are being phased out due to cost constraints, space limitations, and the push toward more integrated digital solutions. Secondly, the need for physical access to the driver board makes real-time or remote adjustments impractical, especially in hard-to-reach installations or enclosed fixtures.

As the demand for smart, wirelessly configurable systems grows, an alternative method is required to enable dynamic, remote, and user-friendly control of fixed output driver settings without compromising the fundamental characteristics of FO drivers.

### SUMMARY

In view of the above-discussed needs, this invention aims to introduce a novel NFC-based functionality for fixed output drivers. One objective is to simplify fixed output driver adjustments by eliminating the need for physical potentiometer. Another objective is to allow real-time parameter adjustments of its output characteristics without the need of reprogramming the driver.

These and other objectives are achieved by the solution of this disclosure as described in the independent claims. Advantageous implementations are further defined in the dependent claims.

According to a first aspect of the invention, a fixed output driver is provided. The fixed output driver comprises a power supply circuit configured to output a constant output characteristic based on a predefined value. The fixed output driver further comprises an NFC communication module configured to receive one or more control parameters from an external NFC-enabled device, and a control circuit configured to adjust the output characteristic of the driver within a predefined range relative to the predefined value based on the received control parameters, without modifying the predefined value.

The present invention leverages NFC technology for real-time, and wireless adjustments to the driver's output without needing physical reprogramming. This prevents unintended modifications by keeping a reference predefined value intact, and also eliminates the need for additional wired communication interfaces, reducing hardware complexity. While LED drivers are a key focus, the invention can be extended to other fixed output drivers in power electronics, industrial automation, and specialized control systems, providing an innovative approach to real-time parameter adjustments using NFC technology.

In an implementation of the first aspect, the control circuit is further configured to: process the received control parameters to check if they are valid, before adjusting the output characteristics; and reject or ignore invalid parameters to prevent incorrect adjustments.

This configuration enhances system reliability by preventing erroneous or malicious configurations. It also improves operational safety by ensuring that only valid, predefined parameter adjustments are applied, and reduces faulty operations due to unintended or corrupted data.

In an implementation of the first aspect, the control unit is further configured to authenticate the NFC-enabled device before processing the one or more control parameters.

Preventing unauthorized access ensures only verified NFC devices can modify driver settings. This configuration enhances security, particularly in commercial and industrial applications where unauthorized modifications could impact performance.

In an implementation of the first aspect, the fixed output driver further comprises a non-volatile memory configured to store the one or more received control parameters.

This configuration enables instant application of stored settings upon device power-up.

In an implementation of the first aspect, the NFC communication module is further configured to send a status feedback to the NFC-enabled device, indicating success or failure of the received parameter.

This configuration provides real-time confirmation of parameter updates, improving user experience. It enables error handling, allowing corrective actions if validation fails. It further supports interactive tuning, where users can adjust and verify settings dynamically.

In an implementation of the first aspect, the control unit is configured to execute the adjustment of the output current without requiring a restart.

This invention enables instantaneous adjustments, improving real-time lighting control.

In an implementation of the first aspect, the one or more control parameters comprise: light control parameters, including brightness, color temperature, and light color settings.

This invention enables dynamic lighting control, making it suitable for smart lighting applications. This configuration supports customization for different environments, and also enhances energy efficiency by allowing brightness adjustments based on ambient conditions.

In an implementation of the first aspect, wherein the fixed output driver is an LED driver.

This invention allows integration with smart lighting systems such as LED lighting systems.

According to a second aspect of the invention, a lighting control system is provided. Said lighting control system comprises: a fixed output driver according to the first aspect of the invention or any implementation forms of the first aspect, at least one luminaire connected to the fixed output driver; and an NFC-enabled device configured to transmit one or more control parameters to the fixed output driver during device operation.

The present invention proposes a complete lighting ecosystem where the driver, NFC device, and luminaire work together. It allows seamless adjustment of lighting settings via smartphones or other NFC-enabled controllers, thereby improving usability, making lighting adjustments wireless and intuitive.

In an implementation of the second aspect, the NFC-enabled device is a smartphone running a dedicated application for lighting adjustment, or a dedicated NFC programmer.

This invention allows users to adjust lighting settings via a mobile app, improving accessibility, which eliminates the need for specialized NFC programming hardware. This configuration enhances smart home integration, making it compatible with existing Internet of Things (IoT) ecosystems. Alternatively, the user can adjust the lighting settings using a dedicated NFC programmer, such as a standalone handheld device.

According to a third aspect of the invention, a method for adjusting output characteristic of a fixed output driver according to the first aspect of the invention or any implementation forms of the first aspect in real time, is provided. The method comprises: detecting whether the driver is in operation; transmitting control parameters from an NFC-enabled device to the driver if the driver is in operation; process the received control parameters at the driver to check if they are valid; and adjust the output characteristic of the driver within a predefined range relative to a predefined value based on the received control parameters, without modifying the predefined value.

This invention provides a clear, structured approach for real-time NFC-based adjustments. It ensures secure and validated updates, preventing unauthorized changes. It also enables seamless parameter modifications without interrupting driver operation. Optionally, additional validation mechanisms may be implemented to prevent unauthorized modifications. Possibly, the parameters may be saved in a persistent storage for ensuring settings remain intact after power loss. The fixed output driver may be LED driver, and the invention can enhance the usability, efficiency, and security of modern lighting control systems.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Figure 1: shows an exemplary fixed output driver structure according to an embodiment of this invention.
- Figure 2: shows data programming and processing flow for the fixed output driver according to an embodiment of this invention.
- Figure 3: shows configuration process for the fixed output driver according to an embodiment of this invention.
- Figure 4: shows internal data processing within the fixed output driver according to an embodiment of this invention.
- Figure 5: shows a method according to an embodiment of this invention.

### DETAILED DESCRIPTION OF EMBODIMENTS

Illustrative embodiments of a fixed output driver, a lighting control system, and a corresponding method are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

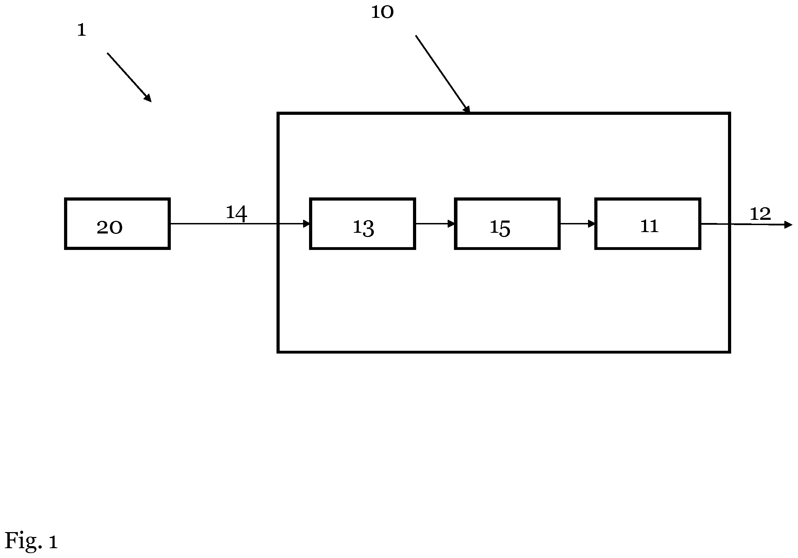

Figure 1 shows a simplified schematic diagram of a fixed output driver 10 according to an embodiment of the invention. The fixed output driver 10 comprises several key components that enable NFC-based real-time adjustments, as follows:
A power supply circuit 11 is configured to output a constant output characteristic 12 based on a predefined value. The power supply circuit maintains a stable current or voltage.

For instance, if the fixed output driver 10 is an LED driver, the constant output characteristic is to ensure consistent performance of the connected luminaires.

An NFC communication module 13 is responsible for receiving one or more control parameters 14 from an external NFC-enabled device 20. Possibly, this module 13 facilitates bidirectional communication, allowing the driver 10 to receive commands and send feedback to the NFC device 20.

A control circuit 15 is provided to adjust the output characteristic 12 of the driver 10 within a predefined range. The control circuit ensures that adjustments do not exceed predefined operational limits and that modifications are made without altering the predefined value, thereby maintaining system integrity.

Upon receiving control parameters 14 via the NFC communication module 13, the control circuit 15 processes them to ensure system stability. The control circuit 15 may validate the received control parameters before applying any adjustments. If a parameter is found to be invalid due to corruption or unauthorized modification, it is rejected or ignored to prevent erroneous adjustments.

The control circuit 15 is also configured to authenticate the NFC-enabled device 20 before processing the received control parameters 14. This security feature ensures that only authorized devices can modify system settings, preventing unauthorized access and tampering.

Notably, the control circuit 15 may include a microcontroller. It may have a processor responsible for handling NFC communication and updating settings accordingly.

Optionally, the fixed output driver 10 may further include a non-volatile memory for storing validated control parameters 14. This allows retention of settings after power loss or restart, ensuring that the last known configuration remains active without requiring manual reprogramming. The persistent storage also enables pre-configuration of devices before installation, improving manufacturing efficiency and reducing the need for on-site adjustments.

Optionally, the NFC communication module 13 may provide a status feedback response to the NFC-enabled device 20, indicating whether the received parameter was successfully validated and applied. If validation is unsuccessful, an error message is sent to inform the user, allowing corrective actions to be taken. This feature enhances system reliability by ensuring that the user is always informed of the status of parameter updates.

A key feature of the invention is that adjustments to the output characteristic 12 occur dynamically, without requiring a system restart. This eliminates downtime and allows continuous operation of the luminaire. The ability to implement changes instantly enhances efficiency, making the system particularly beneficial in commercial and industrial lighting applications where interruptions in lighting can be disruptive.

The control parameters 14 that can be adjusted via the NFC communication module 13 include brightness settings, which allow dimming and intensity control, color temperature adjustments, enabling smooth transitions between warm and cool lighting, and light color settings, which support RGB control for multi-color lighting systems. These features enable highly customizable lighting experiences, improving comfort, aesthetics, and energy efficiency.

In one implementation, the fixed output driver 10 is designed specifically as an LED driver, making it highly suitable for a wide range of lighting applications. This includes architectural and commercial lighting, smart home automation, and industrial lighting systems. For instance, it may be applied in museums and galleries, e.g., providing fine-tuning illumination levels for exhibits.

Referring to Figure 1, it also shows a lighting control system 1 comprises the fixed output driver 10, and an NFC-enabled device 20 for transmitting control parameters. This system allows seamless adjustment of lighting settings without requiring physical access to the driver.

The lighting control system 1 also comprises at least one luminaire (not shown in the figure) connected to the driver 10, which is supplied directly, or by means of a further converter stage, by the driver 10.

A preferred implementation includes an NFC-enabled smartphone running a dedicated application for adjusting lighting settings. This eliminates the need for specialized NFC programming hardware, allowing users to control lighting via an intuitive mobile interface. The smartphone-based control enhances smart home integration, making it compatible with existing IoT ecosystems. However, it is also possible to use a dedicated NFC programmer, such as a standalone handheld device, to control the lighting.

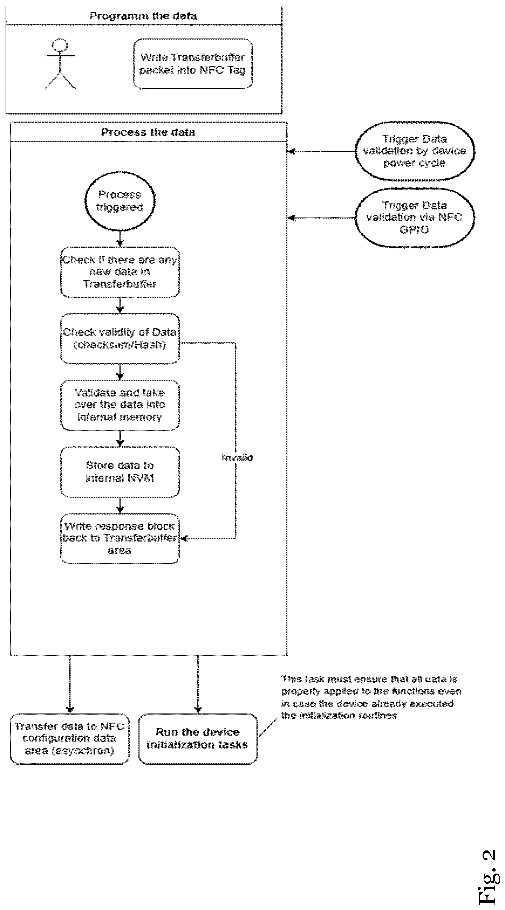

Figure 2 illustrates a data programming and processing flow for the fixed output driver 10, showing how control parameters are received, validated, stored, and applied within the system. The figure consists of two primary sections: data programming and data processing.

The data programming phase begins with an external NFC-enabled device 20 writing a transfer buffer packet into an NFC tag. This step ensures that new control parameters can be stored and later retrieved by the fixed output driver.

Once data is programmed, the system enters the data processing phase, which is triggered either by a device power cycle or via an NFC General-Purpose Input/output (GPIO) trigger. When the process starts, the system first checks if there are any new data packets available in the transfer buffer. If new data is found, the system proceeds to verify its validity by performing checksum or hash verification. If the validation fails, the data is rejected, preventing incorrect or corrupted data from being applied. If the data is valid, the control circuit takes over the received parameters and transfers them into internal memory.

After validation and initial storage, the system writes the validated data into non-volatile memory to ensure persistence even in the event of a power loss. Once the data is securely stored, a response block is written back to the transfer buffer area, allowing the NFC-enabled device to retrieve feedback on whether the update was successful or not.

Following data storage, the system enters the final phase, where the validated parameters are applied to the device.

In this step, data is transferred asynchronously to the NFC configuration data area, ensuring seamless updates without interrupting the system's operation. Simultaneously, the system executes device initialization tasks, ensuring that all updated data is correctly applied to the driver functions. This process is designed to ensure that even if the device has already executed its initialization routines, it correctly integrates the newly received control parameters.

Through this structured approach, the system maintains data integrity, security, and real-time adaptability, allowing users to update and modify driver settings efficiently while ensuring seamless device operation.

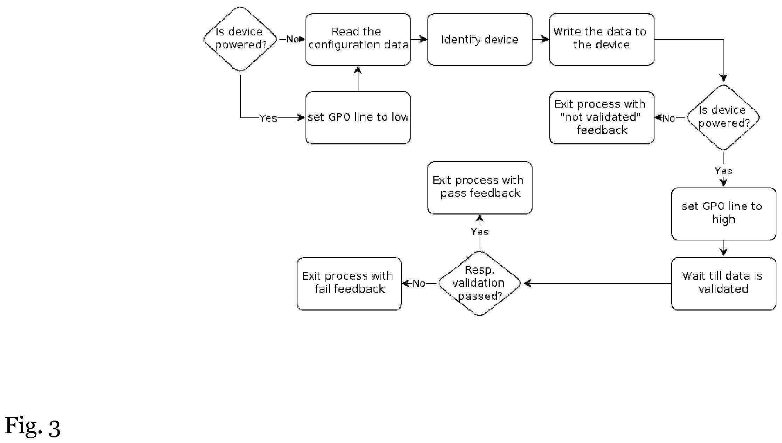

Figure 3 illustrates the configuration process from the perspective of the configuration tool (NFC application), which operates via RF communication to manage data transfer between the tool and the fixed output driver 10. The primary focus in this flow is on how data is transmitted.

The configuration tool first determines whether the device (the driver 10) is powered. If the device is not powered, the tool reads the configuration data and identifies the device before proceeding with writing data. If the device is powered, the NFC application sets the General-Purpose Output (GPO) line to a low state, indicating that it is ready to begin configuration. The NFC application then reads configuration data, identifies the device, and transmits the new configuration to be stored in the driver. If the device is not powered during this stage, the tool exits the process with a "not validated" feedback message, informing the user that the update was unsuccessful.

If the device is confirmed to be powered, the configuration tool sets the GPO line to high, signaling that the device is prepared for validation. The system then waits until data validation is completed. Once the validation response is received, the tool determines whether the data transfer was successful. If the validation fails, the process exits with failure feedback. If validation is successful, the process completes with pass feedback, confirming that the device has successfully stored and applied the received configuration.

Notably, the configuration tool can detect the state of the device and react accordingly. Depending on whether the device is powered and able to receive data, the NFC application adjusts its operations dynamically, ensuring a reliable and adaptive configuration process.

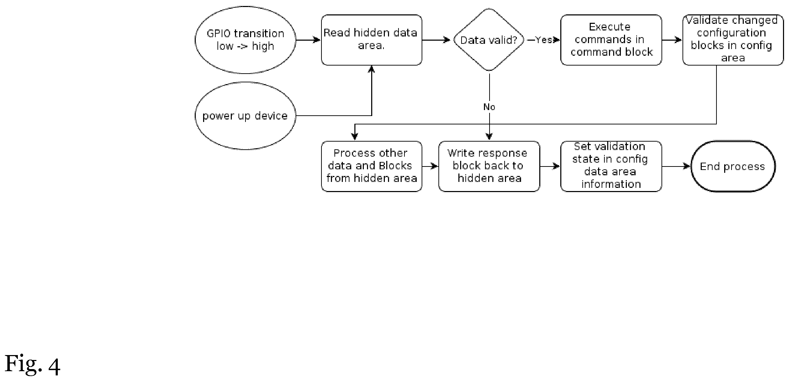

Figure 4 provides a high-level overview of the internal data processing within the device. Unlike Figure 3, which focuses on external data transmission via the NFC tool, Figure 4 illustrates how the device itself handles the received data. A key feature of this process is that the device autonomously detects a trigger set by the configuration tool and then starts processing the data accordingly.

The process begins when the device is powered on or when a GPO transition from low to high is detected, signaling that new configuration data has been received. The system then accesses a hidden data area where the received configuration parameters are stored. The device then checks whether the stored data is valid. If the data fails validation, the system writes a response block back to the hidden data area and exits the process, ensuring that invalid data does not get applied.

If the data is valid, the device proceeds to execute the commands stored in the command block, applying the configuration changes as required. Once the commands are executed, the system validates the modified configuration blocks stored in the configuration area, ensuring that the updates have been successfully applied. After this validation step, the system updates the validation state within the configuration data area and concludes the process.

Notably, the device is able to automatically detect the NFC tool's configuration trigger and initiate data processing only when necessary. This ensures efficient resource utilization, prevents unnecessary data processing, and guarantees that configuration changes are properly validated before being applied. By leveraging GPO-triggered execution and internal data validation mechanisms, this method enhances the reliability, security, and efficiency of parameter adjustments within the device.

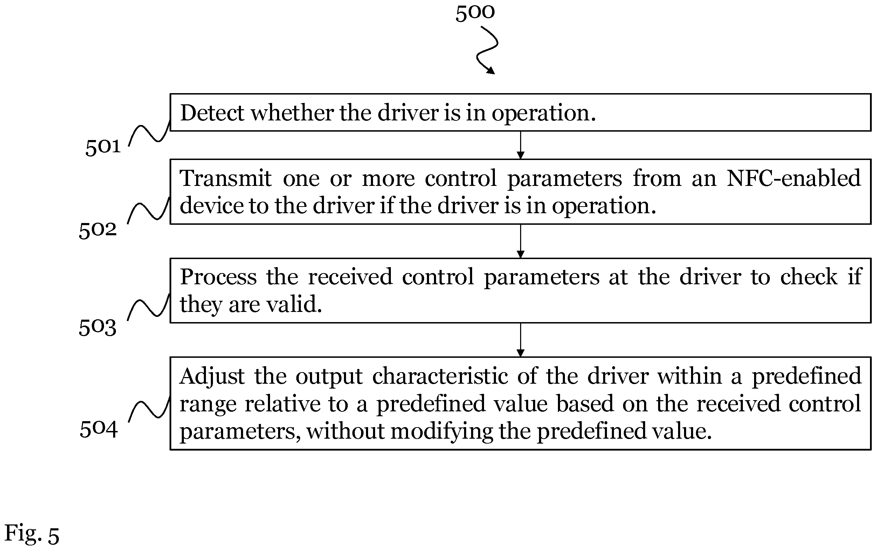

With reference to Figure 5, an embodiment of a method 500 for adjusting the output characteristics of the fixed output driver 10 in real time, is illustrated.

This method is executed based on NFC-based parameter transmission, validation, and application while ensuring that modifications occur without requiring a restart. The process outlined in Figure 5 aligns with the previous embodiments, providing a structured approach for dynamically configuring the fixed output driver 10 as shown in Figure 1.

The method begins with step 501 of detecting whether the driver is in operation. This step ensures that any parameter adjustments occur only when the device is in an active state. If the device is powered and operational, the system proceeds to transmit (step 502) one or more control parameters 14 from an NFC-enabled device 20 to the driver 10. These parameters 14 are received by the NFC communication module 13, which facilitates the wireless transfer of configuration data.

Once the control parameters 14 are received, the driver 10 enters the processing phase (step 503), where the parameters are validated before being applied. The validation process may include checking the integrity of the received data to ensure it is correctly formatted and within acceptable operational limits. If validation fails, the process terminates, preventing incorrect configurations from affecting the system.

If the validation is successful, the system then adjusts (step 504) the output characteristic 12 of the driver 10 within a predefined range relative to a predefined value. This step ensures that any changes remain controlled and do not alter the predefined baseline settings of the driver. Importantly, these adjustments occur without modifying the predefined value, preserving the integrity of the driver's operational characteristics.

The process in Figure 5 also reflects the method's capability to execute real-time adjustments without requiring a restart. Instead of rebooting the driver, the new configuration is applied seamlessly, ensuring continuous operation. This feature enhances efficiency, particularly in smart lighting applications, where dynamic adjustments to brightness, color temperature, or other output characteristics must occur without disrupting the system.

Overall, Figure 5 visually represents the real-time parameter adjustments, integrating NFC-based communication, secure validation, and seamless application of updated control parameters. This ensures a robust, flexible, and efficient configuration process for the fixed output driver.

To summarize, the present invention provides a fixed output driver with NFC-based real-time parameter adjustment, offering an innovative approach to wireless, secure, and dynamic configuration of lighting systems. By integrating an NFC communication module, a control circuit, and a validation mechanism, the invention allows for seamless adjustments to brightness, color temperature, and other operational parameters without requiring a system restart.

The invention ensures that only valid and authenticated control parameters are applied, preventing unauthorized or erroneous configurations. The use of non-volatile memory allows settings to persist after power cycles, ensuring continuity of operation. Furthermore, the integration of a feedback mechanism provides real-time status updates, enhancing user control and reliability.

The invention is particularly beneficial for LED lighting systems, where precise current regulation and real-time adjustments are essential. The inclusion of a smartphone-based NFC configuration tool further enhances usability, eliminating the need for specialized hardware while enabling intuitive control through a mobile application.

Overall, the proposed fixed output driver and its corresponding method represent a significant advancement in lighting technology, providing a secure, efficient, and user-friendly solution for modern lighting applications. By leveraging NFC communication for real-time parameter adjustments, the invention enables greater flexibility, improved system efficiency, and enhanced user experience, making it well-suited for smart lighting, industrial applications, and IoT-based environments.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations, and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A fixed output driver (10) comprising:
a power supply circuit (11) configured to output a constant output characteristic (12) based on a predefined value;
an NFC communication module (13) configured to receive one or more control parameters (14) from an external NFC-enabled device (20); and
a control circuit (15) configured to adjust the output characteristic (12) of the driver (10) within a predefined range relative to the predefined value based on the received control parameters (14), without modifying the predefined value.

2. The fixed output driver (10) of claim 1, wherein the control circuit (15) is further configured to:
process the received control parameters (14) to check if they are valid, before adjusting the output characteristic (12); and
reject or ignore invalid parameters to prevent incorrect adjustments.

3. The fixed output driver (10) of claim 2, wherein the control unit (15) is further configured to authenticate the NFC-enabled device (20) before processing the one or more control parameters (14).

4. The fixed output driver (10) of any preceding claims, further comprising:
a non-volatile memory configured to store the one or more received control parameters (14).

5. The fixed output driver (10) of any preceding claims, wherein the NFC communication module (13) is further configured to send a status feedback to the NFC-enabled device (20), indicating success or failure of the received control parameter (14).

6. The fixed output driver (10) of any preceding claims,
wherein the control unit (15) is configured to execute the adjustment of the output current without requiring a restart.

7. The fixed output driver (10) of any preceding claims, wherein the one or more control parameters (14) comprise:
light control parameters, including brightness, color temperature, and light color settings.

8. The fixed output driver (10) of any preceding claims, wherein the fixed output driver (10) is an LED driver.

9. A lighting control system (1) comprising:
a fixed output driver (10) of any preceding claims;
at least one luminaire connected to the fixed output driver (10); and
an NFC-enabled device (20) configured to transmit one or more control parameters to the fixed output driver (10) during device operation.

10. The lighting control system (1) of claim 9, wherein the NFC-enabled device (20) is a smartphone running a dedicated application for lighting adjustment, or a dedicated NFC programmer.

11. A method (500) for adjusting output characteristic of a fixed output driver (10) of any of claims 1 to 8 in real time, the method comprising:
detecting (501) whether the driver (10) is in operation;
transmitting (502) one or more control parameters (14) from an NFC-enabled device (20) to the driver (10) if the driver (10) is in operation;
processing (503) the received control parameters (14) at the driver (10) to check if they are valid; and
adjusting (504) the output characteristic (12) of the driver (10) within a predefined range relative to a predefined value based on the received control parameters (14), without modifying the predefined value.
